# EUROPEAN PATENT APPLICATION

(11) **EP 4 177 989 A1**
(43) Date of publication of application: **10.05.2023**
(21) Application number: 21832109.9
(22) Date of filing: 02.07.2021
(51) Int. Cl.: H01M 4/62, H01M 4/13, H01M 10/052, H01M 4/02

(54) **SLURRY COMPOSITION FOR SECONDARY BATTERY ELECTRODE, AND SECONDARY BATTERY ELECTRODE USING SAME**

(30) Priority: 02.07.2020 KR 20200081707
(71) Applicant: Dongjin Semichem Co., Ltd, Incheon 22824 (KR)
(72) Inventor: KIM, Seong Do, Hwaseong-si Gyeonggi-do 18635 (KR); KIM, Dong Ho, Hwaseong-si Gyeonggi-do 18635 (KR); KIM, Tae Yoon, Hwaseong-si Gyeonggi-do 18635 (KR); YANG, Hwi Chan, Hwaseong-si Gyeonggi-do 18635 (KR); LEE, Joo Chul, Hwaseong-si Gyeonggi-do 18635 (KR)
(74) Representative: Grünecker Patent- und Rechtsanwälte PartG mbB
(86) International application number: PCT/KR2021/008405
(87) International publication number: WO 2022/005241

(57) **Abstract**

The present disclosure relates to a slurry composition for a secondary battery electrode, and a secondary battery electrode manufactured using the same. The slurry composition includes dispersants of specific components, a carbon-based conductive material, and an organic solvent. The slurry composition has an advantage in that the stability of the carbon-based conductive material is excellent. In addition, due to the presence of a polar functional group in the dispersant, the surface treatment effect for the carbon-based conductive material is excellent, and thus the dispersibility of the carbon-based conductive material is remarkably improved.

## Description

### Technical Field

The present disclosure relates to a slurry composition for a secondary battery electrode and a secondary battery electrode manufactured using the same. More particularly, the present disclosure relates to a slurry composition for a secondary battery electrode, the composition including a dispersant of a specific component, a carbon-based conductive material, and an organic solvent.

### Background Art

Since the first advent of secondary batteries in the 1990s, research on secondary batteries has been continuously conducted and progressed. In the process, auxiliary elements that supplement and improve characteristics of the cathode and anode active materials, electrolyte, and separator, which are the main components of the secondary battery, have been developed. The auxiliary elements include conductive materials and pre-dispersion slurries, and research and development of the auxiliary elements are steadily progressing.

Specifically, the conductive material is a material included in both the cathode and the anode and used to easily move electrons between active materials and or between an active material and a current collector. Specifically, research and development are being conducted focusing on carbon-based materials. The pre-dispersion slurry is a solution in which a conductive material is dispersed in a solvent and becomes a material constituting a slurry for an electrode together with an active material and a binder in the future. Recently, as secondary batteries have entered a medium-large sized battery market for electric vehicles and ESS, their importance is increasing. In particular, among conductive materials, carbon nanotube (CNT) is rapidly emerging as the main material for conductive materials.

Carbon nanotube (CNT) has a cylindrical shape with a nano-sized diameter. In the CNT, carbon atoms are arranged in a spiral shape and have an sp2-bonding structure. Based on this structure, carbon nanotubes (CNTs) have attracted attention as a material with excellent physical properties in terms of electrical properties, strength, resilience, and thermal conductivity and are in the spotlight as new materials in various fields.

As a conductive material for secondary batteries, carbon nanotubes (CNTs) can increase energy density and improve lifespan compared to conventional powdered carbon materials and have the advantage of reducing the size of batteries. In particular, these advantages can act as greater advantages in batteries for electric vehicles that require high capacity and rapid charging and discharging.

However, in spite of these advantages, the low solubility and dispersibility of carbon nanotubes (CNTs) are pointed out as problems. In particular, carbon nanotubes (CNTs) exist in a bundle or agglomerate structure in a solution due to strong Vander-Waals attraction between carbon nanotubes. Accordingly, in the development of conductive materials for secondary batteries using carbon nanotubes (CNTs), the need and importance of technology for dispersing carbon nanotubes (CNTs) is growing, and in particular, a dispersion method for minimizing damage to carbon nanotubes (CNTs) is required.

### Disclosure

### Technical Problem

In order to overcome the above problems, an objective of the present disclosure is to provide a pre-dispersed slurry composition for secondary battery electrodes having excellent electrical properties by improving solubility and dispersibility of a carbon-based conductive material including a linear carbon material such as carbon nanotubes (CNTs).

The objectives of the present disclosure are not limited to the one described above, and other objectives will be clearly understood by those skilled in the art from the following description.

### Technical Solution

As a means for achieving the above objectives, one embodiment of the present disclosure provides a slurry composition for a secondary battery electrode
the composition including: a carbon-based conductive material, a fluorine-based dispersant, a rubber-based dispersant, and an organic solvent, in which
the content ratio of the rubber-based dispersant and the fluorine-based dispersant is in a range of 1:0.1 to 1:1 (wt./wt.),
the fluorine-based dispersant has an average molecular weight in a range of 800,000 to 2,000,000 g/mol, and
the rubber-based dispersant has an average molecular weight in a range of 50,000 to 200,000 g/mol.

At this time, the fluorine-based dispersant may be at least one component selected from the group consisting of a vinylidene fluoride homopolymer, a vinylidene fluoride-hexafluoropropylene copolymer, a vinylidene fluoride-chlorotrifluoroethylene copolymer, and a tetrafluoroethylene-perfluoroalkyl vinyl ether copolymer.

In addition, the fluorine-based dispersant includes a repeating unit containing at least one functional group selected from the group consisting of a carboxyl group (-COOH), a hydroxyl group (-OH), a sulfonyl group (-SO3H), a phosphate group (-PO4), phosphonate group (-PO3), and a halogen group.

In addition, the content of the fluorine-based dispersant may be 0.1% to 10% by weight based on the weight of the total composition.

In addition, the slurry composition may further include a rubber-based dispersant including a repeating unit derived from acrylonitrile-based monomers and olefin-based monomers.

Here, the rubber-based dispersant may include any one or more of the compounds represented by Formula 1 and Formula 2 below:

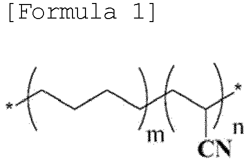

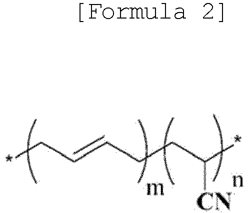

In Formula 1 and Formula 2, m and n are mole fractions of each repeating unit, m + n = 1, and m is 0.1 to 0.9.

In addition, the content of the rubber-based dispersant may be 0.1% to 10% by weight based on the weight of the total composition.

In addition, the carbon-based conductive material may include at least one selected from the group consisting of a carbon nanotube (CNT), a carbon nanofiber, a carbon nanorod, a carbon black, an ethylene black, an acetylene black, a Ketjen black, a channel black, a furnace black, a lamp black, a summer black, a natural graphite, and an artificial graphite.

In addition, the organic solvent may include at least one selected from the group consisting of N-methyl pyrrolidone (NMP), dimethyl sulfoxide (DMSO), isopropyl alcohol (IPA), acetone, and water.

Furthermore, in one embodiment, the present disclosure provides an electrode for a secondary battery prepared using the slurry composition for a secondary battery electrode.

Furthermore, in one embodiment, the present disclosure provides a secondary battery including: a cathode manufactured using a cathode active material and the slurry composition for a secondary battery electrode; an anode; and a separator.

### Advantageous Effects

The slurry composition for a secondary battery electrode, according to the present disclosure, includes a dispersant of a specific molecular weight together with a carbon-based conductive material and an organic solvent so that the stabilizing effect of the carbon-based conductive material is excellent, and since the effect of surface treatment on the carbon-based conductive material is excellent due to the polar functional group provided in the dispersant, the dispersibility of the carbon-based conductive material is remarkably improved.

### Description of Drawings

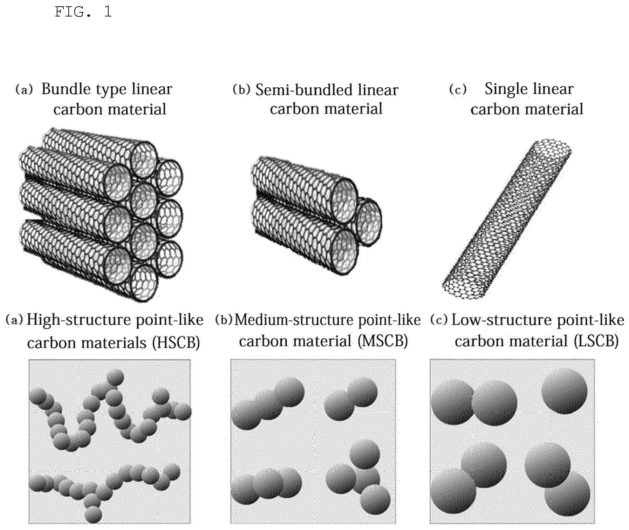

FIG. 1 is an image showing the types of carbon-based conductive materials according to their structures.

### Best Mode

Prior to a description of the present disclosure, it should be noted that the terms used in the present specification are used only to describe specific examples and are not intended to limit the scope of the present disclosure, which will be defined only by the appended claims. Unless otherwise defined herein, all terms, including technical and scientific terms used herein, have the same meaning as commonly understood by those who are ordinarily skilled in the art to which the present disclosure pertains.

Unless otherwise stated herein, it will be further understood that the terms "comprise", "comprises", and "comprising", when used in this specification, specify the presence of stated features, regions, integers, steps, operations, elements, and/or components but do not preclude the presence or addition of one or more other features, regions, integers, steps, operations, elements, components and/or groups thereof.

Hereinafter, the present disclosure will be described in detail.

### Slurry composition for secondary battery electrode

In one embodiment, the present disclosure provides a slurry composition for a secondary battery electrode including a carbon-based conductive material, a dispersant, a rubber-based dispersant, and an organic solvent.

The slurry composition for a secondary battery electrode, according to the present disclosure, includes a carbon-based conductive material, a dispersant, and an organic solvent. In this case, the dispersant includes the fluorine-based dispersant and the rubber-based dispersant, and the content ratio of the rubber-based dispersant and the fluorine-based dispersant may be 1: 0.1 to 1: 1 (wt./wt.), specifically 1: 0.5 to 1:1 (wt./wt.).

In addition, the average molecular weight of the fluorine-based dispersant may be in a range of 800,000 g/mol to 2,000,000 g/mol, preferably 900,000 g/mol to 1,500,000 g/mol, and more preferably 1,000,000 g/mol to 1,400,000 g/mol.

In addition, the average molecular weight of the rubber-based dispersant may be in a range of 50,000 to 200,000 g/mol, preferably 50,000 to 180,000 g/mol.

When the content ratio and average molecular weight of the rubber-based dispersant and the fluorine-based dispersant are out of the above range, the viscosity of the slurry composition increases and the dispersibility of the carbon-based conductive material decreases, as well as there is a limitation in that the viscosity stability of the slurry composition and the electrical properties of a cured product prepared using the slurry composition deteriorate.

In addition, the fluorine-based dispersant is a vinylidine fluoride-based dispersant and may be at least one component selected from the group consisting of a vinylidene fluoride homopolymer, a vinylidene fluoride-hexafluoropropylene copolymer, a vinylidene fluoride-chlorotrifluoroethylene copolymer, and a tetrafluoroethylene-perfluoroalkylvinyl ether copolymer.

In addition, the fluorine-based dispersant includes a repeating unit containing at least one functional group selected from the group consisting of a carboxyl group (-COOH), a hydroxyl group (-OH), a sulfonyl group (-SO3H), a phosphate group (-PO4), phosphonate group (-PO3), and a halogen group. The functional group included in the fluorine-based dispersant can further improve the binding property between the conductive material and the electrode active material of the slurry composition and the binding property of the slurry composition between the electrode active material and the current collector during electrode preparation. To this end, a carboxylic acid group or a sulfonic acid group may be selected, and in particular, from the viewpoint of the efficiency of collecting transition metal ions eluted from lithium transition metal oxide having a high nickel content, for example, a carboxylic acid group may be selected.

In addition, the content of the fluorine-based dispersant may be 0.1% to 10% by weight based on the total weight of the composition, preferably 0.5% to 3% by weight based on the total weight of the composition. The present disclosure can maximize the effect of uniformly dispersing the carbon-based conductive material without loss of viscosity stability and electrical properties of the slurry composition by controlling the content of the fluorine-based dispersant within the above range. Specifically, when the content of the fluorine-based dispersant is less than 0.1% by weight, the viscosity of the slurry composition increases and the dispersibility of the carbon-based conductive material decreases, and when the content of the fluorine-based dispersant is more than 10% by weight, there is a limitation in that the viscosity stability and electrical properties of the cured product prepared using the slurry composition are degraded.

Furthermore, the dispersant may further include a rubber-based dispersant including a repeating unit derived from an acrylonitrile-based monomer and an olefin-based monomer together with a fluorine-based dispersant. Specifically, the rubber-based dispersant may include repeating units obtained by copolymerizing an acrylonitrile-based monomer such as acrylonitrile or methacrylonitrile, and olefine-based monomers such as 1,3-butadiene, isoprene, 2,3-dimethyl-1,3-butadiene, 1,3-pentadiene, 1,4-pentadiene, 1,4-hexadiene, ethylene, propylene, and 1-butene. For example, the rubber-based dispersant may include any one or more of the compounds containing repeating units represented by Formula 1 and Formula 2 below:

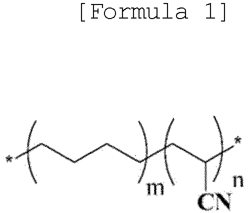

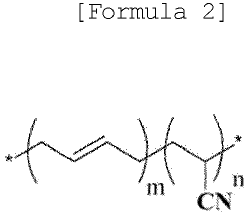

In Formula 1 and Formula 2, m and n are mole fractions of each repeating unit, m + n = 1, and m is 0.1 to 0.9.

As an example, the rubber-based dispersant may include a hydrogenated nitrile butadiene rubber dispersant (HNBR) alone with a repeating unit represented by Formula 1, or a hydrogenated nitrile-butadiene rubber dispersant having a repeating unit of Chemical Formula 1 and a nitrile-butadiene rubber dispersant having a repeating unit of Chemical Formula 2.

The rubber-based dispersant may serve as a stabilizer when dispersing the carbon-based conductive material in the slurry composition and may also serve as a binder in a battery when preparing an electrode.

To this end, the content of the rubber-based dispersant may be 0.1% to 10% by weight based on the total weight of the composition, preferably 0.5% to 3% by weight based on the total weight of the composition. The present disclosure can maximize the effect of uniformly dispersing the carbon-based conductive material without loss of viscosity stability and electrical properties of the slurry composition by controlling the content of the rubber-based dispersant within the above range. Specifically, when the content of the rubber-based dispersant is less than 0.1% by weight, the viscosity of the slurry composition increases, and the dispersibility of the carbon-based conductive material decreases, and when the content of the fluorine-based dispersant is more than 10% by weight, there is a limitation in that the viscosity stability and electrical properties of the cured product prepared using the slurry composition are degraded.

Furthermore, when the dispersant includes both the fluorine-based dispersant and the rubber-based dispersant, the content of the fluorine-based dispersant and the rubber-based dispersant may be 0.5% to 7% by weight based on the total weight of the composition, and the content may be 3% by weight or less, preferably 2% by weight or less, based on the electrode active material when the slurry composition and the electrode active material are mixed. The present disclosure can maximize the uniform dispersion of the carbon-based conductive material by controlling the contents of the fluorine-based dispersant and the rubber-based dispersant within the above ranges.

On the other hand, the carbon-based conductive material used in the slurry composition for a secondary battery electrode, according to the present disclosure, is a material that supplements the conductivity of the active material in the secondary battery electrode and forms a passage through which electrons can move and is not particularly limited and can be used as long as the carbon material has excellent electrical conductivity. For example, the carbon-based conductive material may include at least one selected from the group consisting of linear carbon material such as a carbon nanotube (CNT), a carbon nanofiber, and a carbon nanorod; and point-like carbon material such as carbon black, ethylene black, acetylene black, Ketjen black, channel black, furnace black, lamp black, summer black, natural graphite, and artificial graphite.

In addition, in the carbon-based conductive material, the point-like carbon material connects a short distance in a point-to-point form, whereas the linear carbon material can connect carbon materials spaced apart at a longer distance than the point-like carbon material, thereby easily forming a network structure, and thus the linear carbon material may be included in a high content. As an example, the carbon-based conductive material may include the linear carbon material alone, and more preferably, the carbon-based conductive material may include the linear carbon material and the point-like carbon material together.

In this case, the carbon-based conductive material may include a bundle-shaped linear carbon material and a high-structure point-like carbon material (HSCB), as shown in FIG. 1, and may include a network structure including a low-structured point-like carbon material (LSCB) and a medium-structured point-like carbon material (MSCB) between individual linear carbon materials and semi-bundle linear carbon materials in which individual linear carbon materials are grouped by 2 to 3. The carbon-based conductive material can further improve the electrical properties of the manufactured electrode by having such a network structure.

In addition, the ratio of the linear carbon material and the point-like carbon material is 55% to 95% by weight: 5% to 45% by weight, and the content of the linear carbon material may be greater than the content of the point-like carbon material.

Furthermore, the organic solvent used in the slurry composition for secondary battery electrodes, according to the present disclosure, may include at least one selected from the group consisting of N-methyl pyrrolidone (NMP), dimethyl sulfoxide (DMSO), isopropyl alcohol (IPA), acetone, and water, preferably may include N-methyl pyrrolidone (NMP).

### Electrode for secondary battery

Furthermore, in one embodiment, the present disclosure provides an electrode for a secondary battery prepared using the slurry composition for a secondary battery electrode.

The electrode for a secondary battery, according to the present disclosure, may be manufactured by mixing the electrode active material with the slurry composition for a secondary battery electrode of this disclosure, which includes a carbon-based conductive material, a fluorine-based dispersant, a rubber-based dispersant, and an organic solvent, coating at least one surface of an electrode current collector, and drying and roll pressing thereof.

As an example, the electrode for a secondary battery may be a cathode for a secondary battery, and in this case, the electrode active material may be a lithium transition metal oxide commonly used as a cathode active material. Specifically, the cathode active material includes a layered compound such as lithium cobalt oxide (LiCoO₂) or lithium nickel oxide (LiNiO₂), or a compound substituted with one or more transition metals; lithium manganese oxides such as LiMnO₃, LiMn₂O₃, LiMnO₂, represented by chemical formula of Li₁₊ₓ₁Mn₂₋ₓ₁O₄ (where x1 is 0 to 0.33); lithium copper oxide (Li₂CuO₂); vanadium oxides such as LiV₃O₈, LiV₃O₄, V₂O₅, Cu₂V₂O₇ ; Ni site type lithium nickel oxide represented by the chemical formula of LiNi₁₋ₓ₂M¹ₓ₂O₂ (where, M1= Co, Mn, Al, Cu, Fe, Mg, B, or Ga, and x2 = 0.01 to 0.3); lithium manganese composite oxide represented by the chemical formula of LiMn₂₋ₓ₃M²ₓ₃O₂ (where, M2= Co, Ni, Fe, Cr, Zn, or Ta, and x3 = 0.01 to 0.1) or Li₂Mn₃M₃O₈ (where, M3= Fe, Co, Ni, Cu, or Zn); a spinel structure lithium manganese composite oxide represented by the chemical formula of LiNiₓ₄Mn₂₋ₓ₄O₄ (where x4 = 0.01 to 1); LiMn₂O₄ in which Li part of the formula is substituted with an alkaline earth metal ion; disulfide compounds; Fe₂(MoO₄)₃, but is not limited thereto.

In addition, since the slurry composition for secondary battery electrodes is the same as the above-described configuration, overlapping contents are omitted.

In addition, the electrode current collector of the electrode is not particularly limited as long as the electrode current collector has conductivity without causing a chemical change in the battery and may use, for example, stainless-steel, aluminum, nickel, titanium, sintered carbon, or stainless-steel surface-treated with carbon, nickel, titanium, silver, etc. In addition, the current collector may have a thickness of typically in a range of 3 to 500 um, and the adhesive force of the cathode active material may be increased by providing fine irregularities on the surface thereof. Such current collectors may be used in various forms, such as films, sheets, foils, nets, porous materials, foams, and non-woven fabrics.

### Secondary battery

Furthermore, in one embodiment, the present disclosure provides a secondary battery including a cathode prepared using the above-described slurry composition for a secondary battery electrode and a cathode active material.

The secondary battery according to the present disclosure includes the above-described secondary battery electrode, specifically, the cathode manufactured using the slurry composition for secondary battery electrode and the cathode active material of the present disclosure and has excellent rapid charge/discharge characteristics and battery-life characteristics.

At this time, the secondary battery includes a cathode, an anode positioned opposite to the cathode, and a separator interposed between the cathode and the anode, and the cathode is as described above. In addition, the secondary battery may selectively further include a battery container accommodating electrode assembly of a cathode, an anode, and a separator, and a sealing member sealing the battery container.

Specifically, the anode may include an anode current collector and an anode active material layer positioned on the anode current collector.

Here, a compound capable of reversible intercalation and deintercalation of lithium may be used as the anode active material. For example, the anode active material may include carbonaceous materials such as an artificial graphite, a natural graphite, a graphitized carbon fiber, and an amorphous carbon; metallic compounds capable of being alloyed with lithium, such as Si, Al, Sn, Pb, Zn, Bi, In, Mg, Ga, Cd, Si alloys, Sn alloys, or Al alloys; metal oxides capable of doping and undoping lithium, such as SiOp (0 < β < 2), SnO₂, vanadium oxide, and lithium vanadium oxide; or a composite including the metallic compound and the carbonaceous material, such as a Si-C composite or an Sn-C composite, and any one or a mixture of two or more of these may be used. In addition, a metal lithium thin film may be used as the anode active material. In addition, as the carbon material, both low crystalline carbon and high crystalline carbon may be used. Soft carbon and hard carbon are typical examples of low crystalline carbon, and as a high crystalline carbon, high-temperature calcined carbon such as amorphous, platy, scaly, spherical, or fibrous natural graphite or artificial graphite, or kish graphite, pyrolytic carbon, mesophase pitch-based carbon fiber, meso-carbon microbeads, mesophase pitches, and petroleum or coal tar pitch derived cokes is representative.

In addition, the anode current collector is not particularly limited as long as the anode current collector does not cause chemical changes in the battery and has high conductivity. For example, copper, stainless steel, aluminum, nickel, titanium, fired carbon, copper, or stainless-steel surface-treated with carbon, nickel, titanium, silver, etc., may be used. In addition, the anode current collector may generally have a thickness of 3 µm to 500 pm, and like the cathode current collector, fine irregularities may be formed on the surface of the current collector to enhance the binding force of the anode active material. For example, the anode current collector may be used in various forms, such as films, sheets, foils, nets, porous materials, foams, and nonwoven fabrics.

Furthermore, the separator separates the anode and the cathode and provides a movement path for lithium ions, and may be used without particular limitation as long as it is generally used as a separator in a lithium secondary battery, and in particular, may have a low resistance to ion migration of the electrolyte and excellent electrolyte-moisturizing ability. Specifically, a porous polymer film prepared from a polyolefin-based polymer such as an ethylene homopolymer, a propylene homopolymer, an ethylene/butene copolymer, an ethylene/hexene copolymer, and an ethylene/methacrylate copolymer may be used, or a laminate structure of two or more thereof. In addition, a conventional porous nonwoven fabric, for example, a nonwoven fabric made of high melting point glass fiber, polyethylene terephthalate fiber, or the like, may be used. In addition, a coated separator containing a ceramic component or a polymer material may be used to secure heat resistance or mechanical strength and may be selectively used in a single-layer or multilayer structure.

Hereinafter, the present disclosure will be described in more detail with reference to examples. However, the following examples are provided to explain the present disclosure in more detail, and the scope of the present disclosure is not limited by the following examples. The following examples can be appropriately modified and changed by those skilled in the art within the scope of the present disclosure.

### <Preparation of slurry composition>

The slurry compositions of Examples 1 to 14 and Comparative Examples 1 to 12 according to the above slurry composition were prepared as shown in Table 1 below. % in Table 1 below represents % by weight.

**[Table 1]**

| Division | CNT | Carbon black | Rubber-based dispersant | | Fluorine-based dispersant | | Solvent |
|---|---|---|---|---|---|---|---|
| | | | Molecula r weight of 50,000 to 200,000 g/mol | Molecula r weight of 250,000 to 300,000 g/mol | Molecular weight of 800,000 to 2,000,000 g/mol | Molecula r weight of 600,000 to 700,000 g/mol | |
| Example 1 | 3% | 2% | 4% | - | 2% | - | 89% |
| Example 2 | 3% | 2% | 2.99% | - | 2% | - | 90% |
| Example 3 | 3% | 2% | 2% | - | 2% | - | 91% |
| Example 4 | 3% | 2% | 2% | - | 0.2% | - | 93% |
| Example 5 | 3% | 2% | 3% | - | 1.5% | - | 91% |
| Example 6 | 3% | 2% | 4% | - | 4% | - | 87% |
| Example 7 | 3% | 2% | 6% | - | 6% | - | 83% |
| Example 8 | 3% | 2% | 8% | - | 8% | - | 79% |
| Example 9 | 3% | 2% | 0.09% | - | 0.09% | - | 95% |
| Example 10 | 3% | 2% | 0.90% | - | 0.09% | - | 94% |
| Example 11 | 3% | 2% | 1% | - | 0.1% | - | 94% |
| Example 12 | 3% | 2% | 10% | - | 10% | - | 75% |
| Example 13 | 3% | 2% | 11% | - | 2% | - | 82% |
| Example 14 | 3% | 2% | 11% | - | 11% | - | 73% |
| Comparat ive Example 1 | 3% | 2% | 4% | - | 0.04% | - | 91% |
| Comparat ive Example 2 | 3% | 2% | 0.2% | - | 0.01% | - | 95% |
| Comparat ive Example 3 | 3% | 2% | 0.2% | - | 0.02% | - | 95% |
| Comparat ive Example 4 | 3% | 2% | 8% | - | 9.6% | - | 77% |
| Comparat ive Example 5 | 3% | 2% | 6% | - | 9% | - | 80% |
| Comparat ive Example 6 | 3% | 2% | 5% | - | 10% | - | 80% |
| Comparat ive Example 7 | 3% | 2% | - | 3% | 3% | - | 89% |
| Comparat ive Example 8 | 3% | 2% | - | 6% | 6% | - | 83% |
| Comparat ive Example 9 | 3% | 2% | - | 9% | 9% | - | 77% |
| Comparat ive Example 10 | 3% | 2% | 2% | - | - | 2% | 91% |
| Comparat ive Example 11 | 3% | 2% | 5% | - | - | 5% | 85% |
| Comparat ive Example 12 | 3% | 2% | 7% | - | - | 7% | 81% |

Referring to Table 1, Examples 1 to 8 and Examples 11 to 12 are cases in which the content, content ratio, and average molecular weight of the rubber-based dispersant and the fluorine-based dispersant satisfy appropriate ranges, and Examples 9 to 10 and Examples 13 to 14 are cases where the content range of the rubber-based dispersant and/or the fluorine-based dispersant is not satisfied.

Comparative Examples 1 to 6 are cases in which the content ratio of the rubber-based dispersant and the fluorine-based dispersant is not satisfied, and Comparative Examples 7 to 12 are cases in which the average molecular weight of the rubber-based dispersant and the fluorine-based dispersant does not satisfy an appropriate range.

### < Experimental Example 1: Viscosity measurement of slurry composition>

Table 2 below shows the results of measuring the viscosity of the slurry composition at 50s-1 using a viscometer (Haake Viscometer (Plate Φ 35mm) at 23°C.

**[Table 2]**

| Division | Viscosity (cP, 23°C) |
|---|---|
| Example 1 | 699 |
| Example 2 | 682 |
| Example 3 | 572 |
| Example 4 | 821 |
| Example 5 | 652 |
| Example 6 | 682 |
| Example 7 | 701 |
| Example 8 | 821 |
| Example 9 | 1008 |
| Example 10 | 1002 |
| Example 11 | 782 |
| Example 12 | 882 |
| Example 13 | 925 |
| Example 14 | 1012 |
| Comparative Example 1 | 1021 |
| Comparative Example 2 | 1324 |
| Comparative Example 3 | 1458 |
| Comparative Example 4 | 1245 |
| Comparative Example 5 | 1324 |
| Comparative Example 6 | 1624 |
| Comparative Example 7 | 1056 |
| Comparative Example 8 | 1124 |
| Comparative Example 9 | 1221 |
| Comparative Example 10 | 1041 |
| Comparative Example 11 | 1224 |
| Comparative Example 12 | 1359 |

Referring to Table 2, Examples 1 to 8 and Examples 11 to 12 show excellent viscosity effects when the content, content ratio, and average molecular weight of the rubber-based dispersant and the fluorine-based dispersant satisfy appropriate ranges. On the other hand, when the rubber-based dispersant and/or the fluorine-based dispersant did not satisfy the content range, as in Examples 9 to 10 and Examples 13 to 14, the viscosity further increased.

In the case of Comparative Examples 1 to 6, the content ratio of the rubber-based dispersant and the fluorine-based dispersant was out of the range of 1:0.1 to 1:1, and a problem of increasing viscosity occurred.

In the case of Comparative Examples 7 to 12, the average molecular weight of the rubber-based dispersant and the fluorine-based dispersant was out of the proper range, and the viscosity increased.

Since the secondary battery, according to the present disclosure, stably exhibits excellent discharge capacity, output characteristics, and capacity retention rate, including a cathode prepared using the above-described slurry composition, and the secondary battery is useful in portable devices such as mobile phones, laptops, digital cameras, and electric vehicles such as hybrid electric vehicles (HEVs).

## Claims

1. A slurry composition for a secondary battery electrode, the composition comprising:
a carbon-based conductive material;
a fluorine-based dispersant;
a rubber-based dispersant; and
an organic solvent,
wherein the content ratio of the rubber-based dispersant and the fluorine-based dispersant is in a range of 1:0.1 to 1:1 (wt./wt.), the rubber-based dispersant has an average molecular weight in a range of 50,000 to 200,000 g/mol, and the fluorine-based dispersant has an average molecular weight in a range of 800,000 to 2,000,000 g/mol.

2. The composition of claim 1, wherein the fluorine-based dispersant is at least one component selected from the group consisting of a vinylidene fluoride homopolymer, a vinylidene fluoride-hexafluoropropylene copolymer, a vinylidene fluoride-chlorotrifluoroethylene copolymer, and a tetrafluoroethylene-perfluoroalkyl vinyl ether copolymer.

3. The composition of claim 1, wherein the fluorine-based dispersant comprises a repeating unit containing at least one functional group selected from the group consisting of a carboxyl group (-COOH), a hydroxyl group (-OH), a sulfonyl group (-SO3H), a phosphate group (-PO4), phosphonate group (-PO3), and a halogen group.

4. The composition of claim 1, wherein the fluorine-based dispersant is contained in an amount of 0.1% to 10% by weight based on the weight of the composition.

5. The composition of claim 1, wherein the rubber-based dispersant comprises a repeating unit derived from an acrylonitrile-based monomer and an olefin-based monomer.

6. The composition of claim 1, wherein the rubber-based dispersant comprises any one or more of the compounds represented by Formula 1 and Formula 2 below. 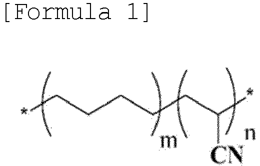 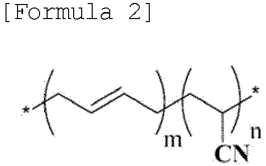 In Formulae 1 and 2, m and n are mole fractions of each repeating unit, m + n = 1, and m is in a range of 0.1 to 0.9.

7. The composition of claim 1, wherein the rubber-based dispersant is contained d in an amount of 0.1% to 10% by weight based on the weight of the total composition.

8. The composition of claim 1, wherein the carbon-based conductive material comprises at least one selected from the group consisting of a carbon nanotube (CNT), a carbon nanofiber, a carbon nanorod, a carbon black, an ethylene black, an acetylene black, a Ketjen black, a channel black, a furnace black, a lamp black, a summer black, a natural graphite, and an artificial graphite.

9. The composition of claim 1, wherein the organic solvent comprises at least one selected from the group consisting of N-methyl pyrrolidone (NMP), dimethyl sulfoxide (DMSO), isopropyl alcohol (IPA), acetone, and water.

10. A secondary battery electrode manufactured using the slurry composition of claim 1.

11. A secondary battery comprising:
a cathode manufactured using a cathode active material and the slurry composition of claim 1;
an anode; and
a separator.
